Europäisches Patentamt

European Patent Office

Office européen des brevets

(19)

(11) **EP 1 002 377 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(21) Anmeldenummer: **97938775.0**

(22) Anmeldetag: **14.08.1997**

(51) Int Cl.⁷: **H04B 1/713**

(86) Internationale Anmeldenummer:
**PCT/DE97/01755**

(87) Internationale Veröffentlichungsnummer:
**WO 99/09673 (25.02.1999 Gazette 1999/08)**

(54) **VERFAHREN UND ANORDNUNG ZUR SYNCHRONISIERUNG DER TRÄGERFREQUENZEN EINES MOBILTEILS AUF DIE TRÄGERFREQUENZEN EINER FESTSTATION**

METHOD AND DEVICE FOR SYNCHRONISING CARRIER FREQUENCIES IN A MOBILE TELEPHONE ON CARRIER FREQUENCIES OF A FIXED STATION

PROCEDE ET DISPOSITIF POUR LA SYNCHRONISATION DES FREQUENCES PORTEUSES D'UNE PARTIE MOBILE SUR LES FREQUENCES PORTEUSES D'UNE STATION FIXE

(84) Benannte Vertragsstaaten:
**DE ES FR GB IT**

(43) Veröffentlichungstag der Anmeldung:
**24.05.2000 Patentblatt 2000/21**

(73) Patentinhaber: **SIEMENS AKTIENGESELLSCHAFT**
**80333 München (DE)**

(72) Erfinder:
• **KOCKMANN, Jürgen**
  **D-48599 Gronau (DE)**
• **SYDON, Uwe**
  **D-40474 Düsseldorf (DE)**

(56) Entgegenhaltungen:
**EP-A- 0 650 274      EP-A- 0 650 304**
**WO-A-95/06377**

**Beschreibung**

Die vorliegende Erfindung bezieht sich auf eine Vorrichtung bzw. ein Verfahren zur Synchronisierung der Trägerfrequenzen eines Mobilteils auf die Trägerfrequenzen einer Feststation für eine Funkübertragung von Daten, bei der die Daten auf mehreren Trägerfrequenzen übertragen werden, wie es insbesondere bei Systemen der Fall ist, die auf einem sogenannten Frequency Hopping Spread Spectrum (FHSS) und einem Zeitmultiplex-Verfahren (TDMA) beruhen.

Bei der Mehrzahl der zur Zeit auf dem Markt erhältlichen schnurlosen Telefonen ist es möglich, mehr als ein Mobilteil von einer Feststation aus zu bedienen. Für eine Kommunikation muß zuerst synchronisiert und registriert werden. Oft wird ein schnurloses Telefonsystem dadurch nachgerüstet, daß ein weiteres Mobilteil zu dem oder den bereits vorhandenen Mobilteilen hinzugefügt werden soll. Dazu muß das neue Mobilteil in das bereits vorhandene schnurlose Telefonsystem, d. h. insbesondere an der Feststation, registriert werden. Unter Registrierung ist also im Sinne der vorliegenden Beschreibung zu verstehen, daß ein, insbesondere ein weiteres Mobilteil im sinne einer Anmeldung an der Feststation registriert wird, so daß es nach erfolgter Registrierung insbesondere Sprachinformationsdaten zu der Feststation senden bzw. von der Feststation empfangen kann.

Probleme bereitet es, wenn als Luftschnittstelle ein sogenanntes Frequency Hopping Spread Spectrum (Frequenzsprung-Streuspektrum)-System verwendet wird und ein, insbesondere ein weiteres Mobilteil in ein solches System eingebunden werden soll. Unter einem Frequency Hopping Spread Spectrum-System ist dabei ein System zu verstehen, bei dem zur Funkübertragung von Daten eine Vielzahl an Trägerfrequenzen bereitsteht und die verwendete Trägerfrequenz von Zeit zu Zeit gewechselt wird. Insbesondere bei einem Zeitmultiplex(TDMA)-System kann ein Wechsel der Trägerfrequenz nach jedem Zeitschlitz der Zeitmultiplexübertragung erfolgen. Ein Wechsel der Trägerfrequenz kann aber auch nach erfolgter Übertragung eines Rahmens des Übertragungsstandards erfolgen. Ein solches Frequency Hopping Spread Spectrum-System hat Vorteile dahingehend, daß die Energie der gesamten Funkübertragung über sämtliche Trägerfrequenzen verteilt ist und somit eine einzelne Trägerfrequenz weniger belastet wird. Dies ist insbesondere von Bedeutung, wenn ein allgemein verfügbares Frequenzband, wie beispielsweise das 2,4 GHz-ISM (Industrial Scientific Medical)-Band verwendet wird, bei dem eine Obergrenze für die maximal pro Trägerfrequenz auftretende Energie vorgeschrieben ist, um eine Störung anderer Teilnehmer so gering wie möglich zu halten.

Als weiterer Vorteil des Frequency Hopping Spread Systems ist zu nennen, daß durch das Bereitstellen einer großen Anzahl von Trägerfrequenzen das System unempfindlicher gegen Störungen wird. Darüber hinaus erhöht sich die Abhörsicherheit des Systems gegenüber Dritten, da der Dritte in der Regel nicht weiß, auf welche Trägerfrequenz nach einem gewissen Zeitraum gewechselt wird.

Auch wenn ein Frequency Hopping Spread Spectrum-System die oben genannten Vorteile aufweist, so besteht doch das Problem der Synchronisierung der Trägerfrequenzen und insbesondere des Wechsels der Trägerfrequenzen bei der Registrierung eines neuen Mobilteils an einer Feststation. Für eine Registrierung ist es nämlich Voraussetzung, daß das zu registrierende Mobilteil mit der Feststation kommunikationsfähig ist, d. h. die Trägerfrequenzwechsel genau nachvollziehen kann.

Dazu muß zuerst einmal der Zustand erreicht werden, daß die Trägerfrequenz der Feststation, auf der beispielsweise ein Kontrollsignal ausgesendet wird, gleich der Trägerfrequenz ist, auf deren Empfang das Mobilteil gesetzt ist. D.h., das Mobilteil, daß sich vor der Registrierung im asynchronen Zustand bezüglich der Trägerfrequenz des Kontrollsignals der Feststation befindet, muß zuerst den sozusagen hüpfenden Sender, nämlich die Trägerfrequenz der Feststation finden, um sich dann mit der Feststation synchronisieren zu können.

Aus der EP 0 650 274 A2 ist ein Funksystem mit fehlertoleranter Frequenzsprungsynchronisation bekannt, bei dem für die Signalisierung von Trägerfrequenzen, die von einer Feststation zu einer Mobilstation und/oder umgekehrt erfolgt, Header-Bits eines Kontrollsignals verwendet werden.

Aus der EP 0 650 304 A2 ist ein Funksystem nach dem Frequenzsprungverfahren bekannt, bei dem zur Verbesserung der anfänglichen Synchronisation von Steuerungskanälen der Mobilstationen des Funksystems spezielle Synchronisationsbursts in die Frequenzsprungsequenz der Steuerungskanäle eingefügt werden.

Es ist Aufgabe der vorliegenden Erfindung, ein Verfahren und eine Anordnung zur Synchronisierung der Trägerfrequenzen eines Mobilteils auf die Trägerfrequenzen einer Feststation zu schaffen, die die Synchronisierung der Trägerfrequenzen eines Mobilteils auf die einer Feststation ermöglichen, auch wenn die Trägerfrequenz der Feststation von Zeit zu Zeit wechselt.

Zur Lösung der genannten Aufgabe ist erfindungsgemäß ein Verfahren zur Synchronisierung der Trägerfrequenzen eines Mobilteils auf die Trägerfrequenzen einer Feststation für eine Funkübertragung von Daten vorgesehen, bei der die Daten auf mehreren Trägerfrequenzen im Sinne eines Frequency Hopping Spread Spectrums übertragen werden, wobei ein Kontrollsignal von der Feststation ausgesendet wird, das jeweils nach Ablauf einer bestimmten Zeitdauer die Trägerfrequenz wechselt. Das Mobilteil erfaßt die Empfangsverhältnisse aufeinanderfolgend für jede der mehreren Trägerfrequenzen. Danach wird das Mobilteil auf Empfang auf derjenigen Trägerfrequenz gesetzt, die die günstigsten Empfangsverhältnisse aufweist, wie es zuvor erfaßt wurde, wobei das Mobilteil solange auf Empfang auf der genannten günstigsten Trägerfrequenz verbleibt, bis die Trägerfrequenz der Feststation auf die Trägerfrequenz des Mobilteils wechselt. Danach können Synchronisierungsdaten von der Feststation zu dem Mobilteil und/oder von dem Mobilteil zu der Feststation ausgetauscht werden. Das Mobilteil sucht (scannt) also alle Trägerfrequenzen ab und sucht sich diejenige, die die günstigsten Empfangsverhältnisse bietet.

Die Empfangsverhältnisse einer Trägerfrequenz kann das Mobilteil beispielsweise anhand des auf dieser Trägerfrequenz vorherrschenden Energieinhalts beurteilen, d.h. anhand der Größe des auf dieser Trägerfrequenz vorliegenden Signals, was als Maß für die auf dieser Trägerfrequenz vorherrschenden Störungen genommen werden kann.

Das Mobilteil kann, nachdem es auf Empfang auf der günstigsten Trägerfrequenz gesetzt ist und eine vorbestimmte Zeitdauer verstrichen ist, in der die Feststation nicht auf die Trägerfrequenz des Mobilteils gewechselt ist, neuerlich die Empfangsverhältnisse aufeinanderfolgend für jede der mehreren Trägerfrequenzen erfassen und neuerlich auf diejenige Trägerfrequenz auf Empfang gesetzt werden, die nunmehr die günstigsten Empfangsverhältnisse aufweist.

Die vorbestimmte Zeitdauer wird daher abhängig von der Zahl der Trägerfrequenzen und der Frequenz bestimmt, mit der die Frequenzstation die Trägerfrequenz wechselt.

Die Feststation kann die Trägerfrequenz insbesondere jeweils nach der Zeitdauer entsprechend einem Zeitschlitz bei einem Zeitmultiplex-Verfahren wechseln.

Die Feststation kann die Trägerfrequenz entsprechend einer vorbestimmten Frequenz wechseln, wobei dann das von der Feststation ausgesendete Kontrollsignal anzeigt, welcher Position der vorbestimmten Sequenz die aktuelle Trägerfrequenz entspricht. Anhand der auch hier bekannten Sequenz und der übermittelten Position der vorbestimmten Sequenz kann dann das Mobilteil selbst ermitteln, auf welche nächste Trägerfrequenz die Feststation wechseln wird.

Als Alternative kann das Kontrollsignal auch angeben, welche die von der Basisstation als nächstes "angesprungene" Trägerfrequenz ist.

Als weitere Alternative kann das Kontrollsignal angeben, welche Trägerfrequenz die Basisstation in dem m-ten Zeitschlitz oder m-ten Rahmen verwenden wird. Dies vorteilhaft, wenn sich ein Mobilteil in dem sogenannten Idle-Locked- oder Multiframe-Modus befindet. In einem solchen Modus synchronisiert sich ein Mobilteil nur in jedem m-ten Zeitschlitz oder Rahmen auf die Basisstation nach, wenn es keine aktive Sprach-Kommunikation mit der Basisstation betreibt.

Das Kontrollsignal muß nicht in jedem Zeitschlitz oder Rahmen ausgesendet werden. Wenn ein Mobilteil, das sich auf eine Basisstation synchronisieren möchte, eine Zeitschlitz oder Rahmen empfängt, in dem kein Kontrollsignal enthalten ist, scant es neuerlich alle Trägerfrequenzen ab, wobei sich dieser Vorgang wiederholt, bis das Mobilteil einen Zeitschlitz oder Rahmen von der Basisstation empfängt, der das Kontrollsignal enthält.

Durch den Austausch der Synchronisierungsdaten kann eine Zeitschlitz- und Rahmensynchronisation ausgeführt werden.

Gemäß einem weiteren Aspekt der Erfindung ist zur Lösung der oben genannten Aufgabe eine Anordnung zur Synchronisierung der Trägerfrequenzen eines Mobilteils auf die Trägerfrequenzen einer Feststation für eine Funkübertragung von Daten vorgesehen, bei der die Daten auf mehreren Trägerfrequenzen übertragen werden. Die Anordnung weist dabei eine Einrichtung in der Feststation zum Aussenden eines Kontrollsignals auf, wobei das Kontrollsignal jeweils nach Ablauf einer bestimmten Zeitdauer die Trägerfrequenz wechselt. In dem Mobilteil ist eine Einrichtung vorgesehen, die aufeinanderfolgend die Empfangsverhältnisse für jede der mehreren Trägerfrequenzen erfaßt. Weiterhin ist eine Einrichtung in dem Mobilteil vorgesehen, die das Mobilteil auf Empfang auf derjenigen Trägerfrequenz setzt, die die günstigsten Empfangsverhältnisse aufweist, wie es die Einrichtung zur Erfassung der Empfangsverhältnisse festgestellt hat, wobei das Mobilteil auf der genannten Trägerfrequenz bleibt, bis die Aussende-Einrichtung der Feststation die Trägerfrequenz des Kontrollsignals auf die eingestellte Trägerfrequenz des Mobilteils wechselt. In der Feststation und im Mobilteil sind Einrichtungen vorgesehen, durch die Synchronisierungsdaten von der Feststation zu dem Mobilteil und/oder in der umgekehrten Richtung ausgetauscht werden können.

Insbesondere kann die Erfassungseinrichtung in dem Mobilteil so vorgesehen sein, daß sie die Empfangsverhältnisse auf einer Trägerfrequenz anhand des auf dieser Trägerfrequenz vorherrschenden Energieinhalts oder der vorherrschenden Störungen erfaßt.

Die Empfangseinrichtung in dem Mobilteil kann, nachdem sie das Mobilteil auf Empfang auf der günstigsten Trägerfrequenz gesetzt hat und eine vorbestimmte Zeitdauer verstrichen ist, in der die Aussendeeinrichtung in der Feststation die Trägerfrequenz des Kontrollsignals nicht auf die Trägerfrequenz des Mobilteils gewechselt hat, neuerlich die Empfangsverhältnisse aufeinanderfolgend für jede der mehreren Trägerfrequenzen erfassen. Danach setzt die Empfangseinrichtung das Mobilteil neuerlich auf Empfang auf derjenigen Trägerfrequenz, die nunmehr die günstigsten Empfangsverhältnisse aufweist.

Die vorbestimmte Zeitdauer kann dabei abhängig von der Zahl der Trägerfrequenzen und der Frequenz festgelegt werden, mit der die Feststation die Trägerfrequenz wechselt.

Die Aussende-Einrichtung in der Feststation kann die Trägerfrequenz des Kontrollsignals entsprechend einer vorbestimmten Frequenz wechseln. Das von der Feststation ausgesendete Kontrollsignal kann dabei Daten aufweisen, die die Position der aktuellen Trägerfrequenz in einem Algorithmus oder Frequenztabelle anzeigen, durch den/die die vorbestimmte Sequenz bestimmt wird.

Die Austauscheinrichtungen können durch Austausch der Synchronisierungsdaten eine Zeitschlitz- und Rahmensynchronisation ausführen.

Die Erfindung wird nun anhand eines Ausführungsbeispiels und bezugnehmend auf die begleitenden Figuren näher erläutert. Es zeigen:

Fig. 1 eine erfindungsgemäße Anordnung zur drahtlosen Übertragung von Daten,

Fig. 2 einen Zeitrahmen eines Datenübertragungsstandards, wie er bei der vorliegenden Erfindung anwendbar ist,

Fig. 3 eine detaillierte Darstellung eines erfindungsgemäßen Zeitrahmens für eine Trägerfrequenz, und

Fig. 4 zur Erläuterung des Ausführungsbeispiels eine schematische Darstellung eines Frequency Hopping Spread Spectrum-Systems.

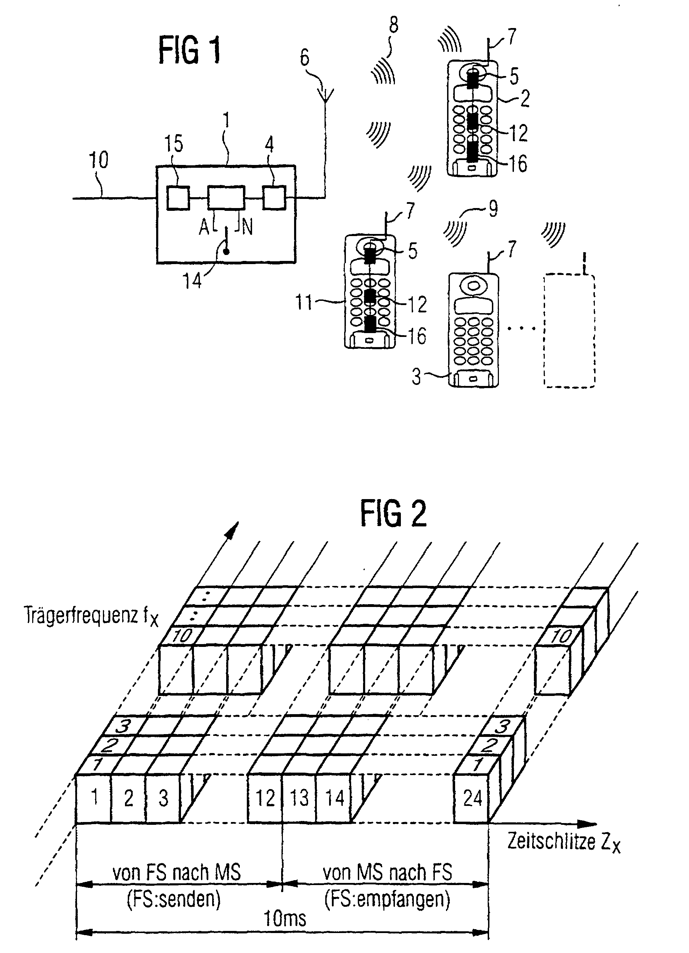

Bezugnehmend auf Fig. 1 soll zuerst der allgemeine Aufbau der erfindungsgemäßen Anordnung zur Funkübertragung erläutert werden. Wie allgemein üblich weist die Anordnung zur Funkübertragung von Daten eine Feststation 1 und mehrere Mobilteile (Mobilstationen, kabellose Telefone) 2, 3, 11 auf. Die Feststation 1 ist dabei mit einer Endstellenleitung 10 mit dem Festnetz verbunden. Die Feststation 1 weist eine Antenne 6 auf, mittels der beispielsweise über einen Funkübertragungsweg 8 mit dem Mobilteil 2 oder über einen Funkübertragungsweg 9 mit dem Mobilteil 3 kommunizieren. Die Mobilteile 2, 3, 11 weisen zum Empfang bzw. zum Senden von Daten jeweils eine Antenne 7 auf.

Nunmehr soll der innere Aufbau einer Feststation 1 näher erläutert werden, soweit er für die vorliegende Erfindung Bedeutung hat. In der Feststation 1 ist ein Prozessor 15 vorgesehen, der anhand eines vorgegebenen Algorithmus (Hop-Algorithmus) eine vorbestimmte Sequenz ermittelt. Alternativ können in dem Prozessor 15 mehrere verschiedene Algorithmen vorgesehen sein, so daß der Prozessor 15 entsprechend dem jeweils verwendeten Algorithmus unterschiedliche Sequenzen ermitteln kann. Die durch den Prozessor 15 ermittelten Sequenzen werden dann zu einer Speicher- und Ausgabeeinrichtung 13 gegeben. Die Speicher- und Ausgabeeinrichtung 13 gibt entweder die durch den Prozessor 15 laufend ermittelte Sequenz oder eine in ihr zuvor fest abgespeicherte Sequenz zu einem HF-Modul 4. Das HF-Modul 4 empfängt und sendet Daten

auf einer Trägerfrequenz $f_x$, die durch den aktuellen Wert der von der Speicher- und Ausgabeeinrichtung 13 her übermittelten Sequenz abhängt. Es findet also somit eine Funkübertragung auf eine Trägerfrequenz $f_x$ statt, wobei die aktuell verwendete Trägerfrequenz entweder mittelbar durch den Prozessor 15 anhand eines Algorithmus bestimmt wird oder alternativ unmittelbar aus dem Wert einer fest in der Speicher- und Ausgabeeinrichtung 13 gespeicherten Sequenz bestimmt wird.

Nunmehr soll der innere Aufbau eines Mobilteils näher beschrieben werden, soweit der für die vorliegende Erfindung Relevanz hat. Der Aufbau eines Mobilteils 2, 3, 11 ist dabei im wesentlichen symmetrisch zu dem oben beschriebenen inneren Aufbau der Feststation 1. Das heißt, jedes Mobilteil 2, 3, 11 weist, wie es in der Erfindung nur für die Mobilteile 2 und 11 dargestellt ist, einen Prozessor 16 auf. Dieser Prozessor 16 ermittelt anhand eines oder alternativ anhand mehrerer zur Verfügung stehenden Hop-Algorithmen eine Sequenz, die er zu einer Speicher- und einer Ausgabeeinrichtung 12 gibt. Die Speicher- und Ausgabeeinrichtung 12 gibt entweder die von dem Prozessor 16 laufend ermittelten Werte der auf dem Algorithmus basierenden Sequenz oder alternativ Werte einer fest in ihr eingespeicherten Sequenz an ein HF-Modul 5 auf. Das HF-Modul 5 sendet oder empfängt Daten auf einer Trägerfrequenz $f_x$, deren Höhe von dem ihr von der Speicher- und Ausgabeeinrichtung 12 übermittelten Wert der Sequenz abhängt. Ein Mobilteil 2, 3, 11 empfängt oder sendet also Daten auf einer Trägerfrequenz $f_x$, deren Höhe entweder von dem aktuellen Wert der von dem Prozessor 16 ermittelten Sequenz oder von dem Wert einer fest in der Speicher- und Ausgabeeinrichtung 12 eingespeicherten Sequenz abhängt.

Dabei ist zu beachten, daß der Prozessor 15 in der Feststation 1 und die Prozessoren 16 in den Mobilteilen 2, 3, 11 denselben Algorithmus bei der Sequenzermittlung zugrunde legen, oder für den Fall, daß mehrere Algorithmen zur Verfügung stehen, die gleiche Auswahl an Algorithmen aufweisen. Für den Fall, daß die Sequenz nicht laufend von dem Prozessor 15, 16 ermittelt wird, sondern fest in den Speicher- und Ausgabeeinrichtungen 12, 13 vorgegeben wird, sind natürlich die Sequenz, die in der Speicher- und Ausgabeeinrichtung 13 der Feststation 1 eingespeichert ist identisch zu den Sequenzen, die jeweils in den Speicher- und Ausgabeeinrichtungen 12 der Mobilteile 2, 3, 11 eingespeichert sind.

Bezugnehmend auf Fig. 2 soll nunmehr ein Übertragungsstandard, wie er bei der vorliegenden Erfindung Verwendung findet, erläutert werden. Wie in Fig. 2 ersichtlich werden auf mehreren Trägerfrequenzen $f_x$, von denen zehn dargestellt sind, zeitlich nacheinander Daten in mehreren Zeitschlitzen, im dargestellten Fall 24 Zeitschlitze $Z_x$, im Zeitmultiplex-Verfahren TDMA (Time Division Multiple Access) übertragen. Im dargestellten Fall auf den Trägerfrequenzen wird dabei im Wechselbetrieb (duplex) gearbeitet. Das heißt, nachdem die ersten zwölf Zeitschlitze Zx gesendet worden sind, wird auf Empfang geschaltet, und es werden in der Gegenrichtung die zweiten zwölf Zeitschlitze (13 - 24) empfangen.

Für den Fall, daß der sogenannte DECT-Standard zur Übertragung verwendet wird, beträgt die zeitliche Dauer eines Zeitrahmens 10 Millisekunden und es sind 24 Zeitschlitze Zx vorgesehen, nämlich 12 Zeitschlitze für die Übertragung von der Feststation zu Mobilteilen und weitere 12 Zeitschlitze Zx zur Übertragung von den Mobilteilen zu der Feststation. Im DECT-Standard sind 10 Trägerfrequenzen $f_x$ zwischen 1,88 GHz und 1,90 GHz vorgesehen.

Die vorliegende Erfindung findet aber insbesondere auch Anwendung für Übertragungen im sogenannten 2,4 GHz-ISM (Industrial Scientific Medical)-Frequenzband. Das ISM-Frequenzband weist eine Bandbreite von 83,5 MHz auf. Über diese 83,5 MHz müssen gemäß der Vorschrift "FCC Part 15" (Federal Communications Commission) mindestens 75 Trägerfrequenzen $f_x$ verteilt sein. Besonders vorteilhaft ist eine Aufteilung der Bandbreite von 83,5 MHz auf 96 Trägerfrequenzen, d.h. ein Kanalabstand von 864 kHz.

Die oben genannten Frequenzbänder und Standards sind rein als Beispiel genannt. Grundsätzliche Voraussetzung für die Erfindung ist es lediglich, daß ein sogenanntes Frequency-Hopping-Spread-Spectrum verwendet wird, d.h. daß mehrere Trägerfrequenzen zur Verfügung stehen, und daß die zur Übertragung gewählte Trägerfrequenz $f_x$ von Zeit zu Zeit gewechselt wird. Für einen solchen Wechsel ist Voraussetzung, daß die Daten in Zeitschlitzen Zx übertragen werden (Zeit-Multiplex-Verfahren). Geeignet ist also beispielsweise der sogenannte DECT-Standard sowie jeder andere abgewandelte und auf diesem DECT-Standard basierende Standard. Die Abwandlung kann beispielsweise in der Verringerung (bspw. Halbierung) der Zeitschlitze pro Rahmen liegen.

Als Zeitdauer, nach der ein Wechsel der Trägerfrequenz erfolgt ist beispielsweise ein Zeitschlitz oder ein Zeitrahmen der Übertragung geeignet.

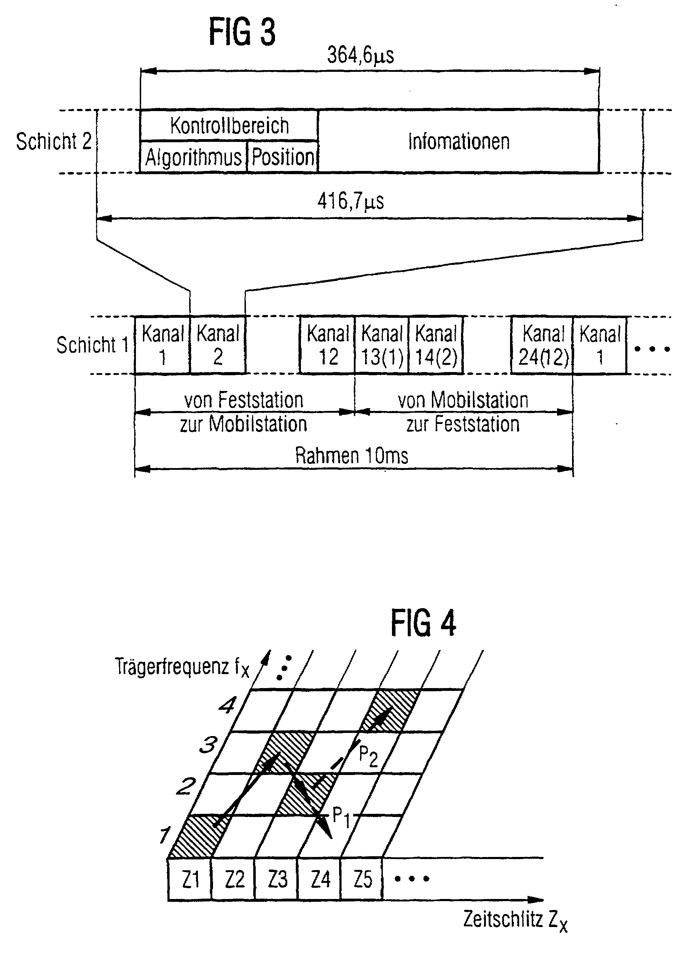

Bezugnehmend auf Fig. 4 soll nun erläutert werden, wie die Wahl einer Trägerfrequenz $f_x$ für einen bestimmten Zeitschlitz Zx ausgeführt wird. Es sei angenommen, daß der Prozessor 15 der Feststation 1 zum Zeitpunkt des Zeitschlitzes Z1 aufgrund eines Algorithmus einen Wert ermittelt, den das HF-Modul 4 der Feststation 1 mittelbar in eine Trägerfrequenz $f_1$ umsetzt. In Fig. 4 ist schraffiert dargestellt, daß zum Zeitpunkt des Zeitschlitzes Z1 die Trägerfrequenz $f_1$ gewählt ist. Beim Übergang vom Zeitschlitz Z1 zu dem folgenden Zeitschlitz Z2 kommt es zwangsweise zu einem Wechsel der Trägerfrequenz $f_x$. Wie durch einen Pfeil in Fig. 4 dargestellt kann beispielsweise der Prozessor 15 der Feststation 1 durch seinen Algorithmus einen Wert ermitteln, der von dem HF-Modul 4 in eine Trägerfrequenz $f_3$ umgesetzt wird. In gleicher Weise kann dann für den Zeitschlitz Z3 eine Trägerfrequenz $f_2$ gewählt werden,

was schraffiert bzw. durch einen Pfeil dargestellt ist.

Auch wenn der Fall erläutert wurde, daß die Trägerfrequenz $f_x$ nach jedem Zeitschlitz Zx gewechselt sind, so sind auch andere Wechselintervalle vorstellbar. Beispielsweise kann die Trägerfrequenz $f_x$ jeweils nach Ablauf eines Rahmens der Übertragung erfolgen.

Die Feststation 1 führt also basierend auf der von dem Prozessor 15 ermittelten Sequenz einen Wechsel der Trägerfrequenz $f_x$ von der Trägerfrequenz $f_1$ auf die Trägerfrequenz $f_3$ and dann auf die Trägerfrequenz $f_2$ aus. Wenn nun eine Kommunikation zwischen der Feststation 1 und einem Mobilteil 11 stattfinden soll, muß sichergestellt sein, daß das Mobilteil 11 die Abfolge der von der Feststation 1 durchgeführten Wechsel der Trägerfrequenz $f_x$ synchron nachvollziehen kann. Dies ist insbesondere ein Problem, wenn ein Mobilteil 11 erstmalig in ein Funkübertragungssystem eingebunden werden soll, d.h. an der Feststation 1 registriert und angemeldet werden muß. Beim unsynchronisierten Betrieb des neuen Mobilteils 11 nach seinem Einschalten wird das Mobilteil 11 einen Wechsel der verwendeten Trägerfrequenzen $f_x$ ausführen, wie es seine Sequenz vorschreibt. Die Sequenz als solche ist dabei identisch mit der in der Feststation 1 vorgegebenen Sequenz 1, die weiter oben erläutert ist. Indessen ist nicht gesichert, daß die Sequenz des Mobilteils 11 nach seinem Einschalten mit der Sequenz der Feststation 1 zeitlich synchronisiert ist.

Als Alternative kann das Kontrollsignal auch angeben, welche die von der Basisstation als nächstes "angesprungene" Trägerfrequenz ist.

Als weitere Alternative kann das Kontrollsignal angeben, welche Trägerfrequenz die Basisstation in dem m-ten Zeitschlitz oder m-ten Rahmen verwenden wird. Dies vorteilhaft, wenn sich ein Mobilteil in dem sogenannten Idle-Locked- oder Multiframe-Modus befindet. In einem solchen Modus synchronisiert sich ein Mobilteil nur in jedem m-ten Zeitschlitz oder Rahmen auf die Basisstation nach, wenn es keine aktive Sprachkommunikation mit der Basisstation betreibt.

Das Kontrollsignal muß nicht in jedem Zeitschlitz oder Rahmen ausgesendet werden. Wenn ein Mobilteil, das sich auf eine Basisstation synchronisieren möchte, eine Zeitschlitz oder Rahmen empfängt, in dem kein Kontrollsignal enthalten ist, scant es neuerlich alle Trägerfrequenzen ab, wobei sich dieser Vorgang wiederholt, bis das Mobilteil einen Zeitschlitz oder Rahmen von der Basisstation empfängt, der das Kontrollsignal enthält.

Nach seinem Einschalten scant das Mobilteil 11 so lange den zur Verfügung stehenden Bereich an Trägerfrequenzen $f_x$ ab, bis es die gerade von der Feststation 1 verwendete Trägerfrequenz $f_x$ erfaßt. Im folgenden soll nun im Detail erläutert werden, wie die Suche der ständig wechselnden Trägerfrequenz gemäß der Erfindung vollzogen wird.

Unmittelbar nach seinem Einschalten befindet sich das Mobilteil 11 in einem bezüglich der Trägerfre-

quenz $f_x$ der Feststation 1 asynchronen Zustand. Auch wenn die Feststation 1 noch keine Übertragung von Sprachdaten ausführt, so sendet sie auf der nach einer vorbestimmten Zeitdauer wechselnden Trägerfrequenz fx ein Kontrollsignal (Kontrollkanal), um die Registrierung von Mobilteilen zu ermöglichen. Dieses Kontrollsignal kann auch bei einer Sprachübertragung beibehalten werden.

Das zu registrierende Mobilteil 11 tastet (scant) nun sämtliche zur Verfügung stehenden Trägerfrequenzen $f_x$ ab. Dabei erfaßt es für jede Trägerfrequenz $f_x$ den auf ihr vorherrschenden Energieinhalt, der als Maß für das Vorhandensein von Störungen genommen wird. Dazu setzt sich das Mobilteil 11 auf einer Trägerfrequenz auf Empfang und erfaßt die Höhe des dieser Trägerfrequenz ($f_x$) aufmodulierten Signals. Wenn der Trägerfrequenz kein Signal aufmoduliert ist, bedeutet dies, daß auf dieser Trägerfrequenz weder ein anderes störendes Mobilfunk-System noch ein echter Störer (Mikrowelle oder dgl.) vorliegen.

Das Mobilteil 11 erfaßt somit durch Scannen aller Trägerfrequenzen die Trägerfrequenz $f_x$, die die besten Empfangseigenschaften bietet. Nach der Erfassung setzt sich das Mobilteil 11 auf Empfang auf der als am günstigsten ermittelten Trägerfrequenz $f_x$. Das Mobilteil 11 wartet nun empfangsbereit auf der als am günstigsten erfaßten Trägerfrequenz fx darauf, daß die Trägerfrequenz des Kontrollsignals der Feststation 1 auf genau diese Trägerfrequenz gewechselt wird. Sobald die Trägerfrequenz $f_x$ des Kontrollsignals der Feststation 1 auf die Trägerfrequenz fx wechselt, auf der das Mobilteil 11 empfangsbereit wartet, kann eine Zeitschlitz- und Rahmensynchronisation durch eine Datenübertragung von dem Mobilteil 11 zu der Feststation 1 und umgekehrt stattfinden.

In Fig. 3 ist dargestellt, wie erfindungsgemäß sichergestellt wird, daß das neue Mobilteil 11 mit der Feststation 1 synchrone Trägerfrequenzwechsel ausführt. Wie in Fig. 3 ersichtlich sind die in einem Zeitschlitz (Kanal) Zx übertragenen Daten zum Großteil Informationsdaten, d.h. beispielsweise Daten die eine Sprachinformation eines Telefongesprächs wiedergeben. Vor dem Bereich der Informationsdaten befindet sich nun ein Kontrollbereich, der beim DECT-Standard A-Feld genannt wird. In diesem Kontrollbereich sind Daten zur Synchronisierung des Betriebs eines zu registrierenden Mobilteils 11 mit dem der Feststation 1 vorgesehen. Wenn keine Daten in dem Informationsbereich übertragen werden, werden nur die Daten des Kontrollbereichs übertragen. Eine Übertragung nur von Daten des Kontrollbereichs stellt also ein Kontrollsignal dar.

Falls dem Prozessor 15 in der Feststation 1 zur Ermittlung der Sequenz, die mittelbar die Wechsel der Trägerfrequenz $f_x$ der Feststation 1 vorgibt, mehrere Algorithmen zur Verfügung stehen, enthält der Kontrollbereich Daten, die den gerade verwendeten Algorithmus identifizieren.

Falls wie oben erläutert ein sogenannter Multiframe-Modus verwendet wird, kann der Kontrollbereich Daten enthalten, die direkt oder indirekt angeben, welche Trägerfrequenz die Basisstation in jedem m-ten Rahmen oder Zeitschlitz verwenden wird. Indirekt kann dies beispielsweise ausgeführt werden, indem die Daten des Kontrollbereichs angeben, welcher Algorithmus in den jeweils m-ten Rahmen oder Zeitschlitzen verwendet wird, falls der Algorithmus in diesen Rahmen oder Zeitschlitzen ein anderer als in den übrigen Rahmen oder Zeitschlitzen ist.

Als weitere Daten zur Synchronisierung enthält der Kontrollbereich Daten, die anzeigen, welche Position in der vorbestimmten Sequenz die für den aktuellen Zeitschlitz Zx verwendete Trägerfrequenz $f_x$ entspricht. Die in Fig. 3 dargestellten Daten des Kontrollbereichs, nämlich Daten, die den verwendeten Algorithmus bezeichnen sowie Daten, die die aktuelle Position der Sequenz des aktuellen Algorithmus bezeichnen, werden von der Feststation 1 zu dem Mobilteil 11 ausgesendet.

Bei der Erfassung der gerade von der Feststation 1 verwendeten Trägerfrequenz $f_x$ erfaßt das Mobilteil 11 die Daten des Kontrollsignals, das von der Feststation 1 ausgesendet wird.

Falls nicht jeder Rahmen oder Zeitschlitz, der von der Basisstation ausgesendet wird, die Kontrolldaten enthält und ein Mobilteil, das sich auf diese Basisstation synchronisieren möchte, einen solchen Rahmen oder Zeitschlitz empfängt, bekommt das Mobilteil keine Informationen übermittelt, die in irgendeiner Weise auf die als nächstes von der Basisstation verwendete Trägerfrequenz schließen lassen. In einem solchen Fall scant das Mobilteil weiter solange alle zur Verfügung stehenden Trägerfrequenzen ab, bis es einen Rahmen oder Zeitschlitz empfängt, der die in die Kontrolldaten enthält.

Zuerst kann daher das Mobilteil 11 bestimmen, welcher Algorithmus aktuell durch den Prozessor 15 in der Feststation 1 verwendet wird, der ja mittelbar den Wechsel der Trägerfrequenzen $f_x$ der Feststation 1 vorgibt. Weiterhin kann das Mobilteil 11 aus den Positionsdaten des Kontrollbereichs erfassen, welche Position in der vorbestimmten Frequenz der ausgesendeten Trägerfrequenz entspricht. Das Mobilteil 11 ist nun also in Kenntnis des verwendeten Algorithmus sowie der Position in der Sequenz. Das Mobilteil 11 kann nun also anhand der hier bekannten Position in der Sequenz sowie der in ihr abgespeicherten Sequenz von sich aus feststellen, welche Trägerfrequenz $f_x$ von der Feststation 1 in dem folgenden Zeitschlitz $Z_x$ verwendet werden wird. Aus den ihr zugeführten Informationen kann also das Mobilteil 11 Informationen für die in den folgenden Zeitschlitzen $Z_x$ zu verwendenden Trägerfrequenzen erzeugen. Somit ist eine Kommunikation mit der Feststation 1 möglich, wie es für eine Anmeldeprozedur oder eine Registrierung nötig ist. Durch die zugeführten Informationen über die zukünftigen Trägerfrequenzwechsel ist also das Mobilteil 11 nun mit der Feststation 1 synchronisiert.

Die Feststation 1 kann eine Schaltvorrichtung 14 aufweisen, die zwischen zwei Stellungen umschaltbar ist, nämlich einer Stellung in den Registriermodus R und eine Stellung entsprechend dem Normal-Übertragungsmodus. Nur wenn die Schaltvorrichtung 14 auf Registriermodus R geschaltet ist, sendet die Feststation 1 die zur Synchronisierung mit einem neu zu registrierenden Mobilteil notwendigen Daten des Kontrollbereichs, nämlich die Informationen hinsichtlich des verwendeten Algorithmus sowie die Informationen hinsichtlich der Position in der vorbestimmten Frequenz basierend auf dem Algorithmus automatisch aus. Wenn die Schaltvorrichtung 14 auf den Normal-Übertragungsmodus N geschaltet ist, werden die genannten Synchronisierungsdaten normalerweise nicht oder nur auf Anfrage hin ausgesendet.

Ein Problem bei der Registrierung eines weiteren Mobilteils 11 kann sich durch einen sogenannten Störer-Ausweichmodus ergeben. Zuerst soll nun für das Ausführungsbeispiel der Erfindung anhand von Fig. 4 erläutert werden, was gemäß diesem Störer-Ausweichmodus hinsichtlich der Trägerfrequenzwahl von der Feststation 1 ausgeführt wird. Bezugnehmend auf Fig. 4 ist ersichtlich, daß zum Zeitpunkt des Zeitschlitzes Z3 die Trägerfrequenz $f_2$ durch die vorbestimmte Frequenz angewiesen ist. Es sei nun angenommen, daß die vorbestimmte Sequenz für den Zeitpunkt des Zeitschlitzes Z4 einen Wechsel auf die Trägerfrequenz $f_4$ anweist. Weiterhin sei angenommen, daß beispielsweise im vorausgegangenen Zeitrahmen der Übertragung die Feststation 1 ermittelt hat, daß bei einer Übertragung auf der Trägerfrequenz $f_4$ Störungen aufgetreten sind. Diese Störungen können beispielsweise daraus resultieren, daß eine andere Funkübertragungsanordnung diese Trägerfrequenz $f_4$ beeinträchtigt.

Wenn sich nun die Feststation 1 in dem sogenannten Störer-Ausweichmodus befindet, wird sie bei der Wahl der Trägerfrequenz $f_x$ für den Zeitschlitz Z4 nicht die Trägerfrequenz $f_4$ wählen, die ja eigentlich durch die vorbestimmte Frequenz vorgeschrieben ist. Die als gestört erfaßte Trägerfrequenz $f_4$ wird vielmehr übergangen, und eine andere Trägerfrequenz $f_x$, beispielsweise die in der vorbestimmten Frequenz folgende Trägerfrequenz $f_x$, wird für den Zeitschlitz Z4 gewählt (wie durch den Pfeil $P_1$ dargestellt). Im in Fig. 4 dargestellten Fall wird also nicht die als gestört erfaßte Trägerfrequenz $f_4$, sondern die als ungestört erfaßte Trägerfrequenz $f_1$ für den Zeitschlitz Z4 angewählt.

Auch wenn dieser Störer-Ausweichmodus natürlich große Vorteile beim Funkübertragungsbetrieb mit bereits eingebundenen Mobilteilen 2, 3 aufweist, so ist doch ersichtlich, daß dieser Störer-Ausweichmodus gleichzeitig große Probleme bei der Registrierung eines neuen Mobilteils 11 schafft. Das Mobilteil 11 wird nämlich, ausgehend von dem in ihm gespeicherten Algorithmus und der ihm aus dem Kontrollbereich der von der Feststation her übertragenen Daten bekannten Position der Trägerfrequenz in der vorbestimmten Sequenz entsprechend dem Algorithmus zum Zeitpunkt des Zeitschlitzes Z3 ermitteln, daß ausgehend von dem nächsten Wert der Sequenz zum Zeitpunkt des Zeitschlitzes Z4 eine Übertragung auf der Trägerfrequenz $f_4$ stattfinden wird. Wenn nun aber aufgrund des Störer-Ausweichmodus die Feststation 1 zum Zeitpunkt des Zeitschlitzes Z4 die Trägerfrequenz $f_1$ wählt, um die gestörte Trägerfrequenz $f_4$ zu vermeiden, und gleichzeitig das zu registrierende Mobilteil 11 aufgrund der ihm zugänglichen Informationen zum Zeitpunkt des Zeitschlitzes Z4 die Trägerfrequenz $f_4$ anwählt, scheitert eine Synchronisierung des Betriebs der Feststation 1 mit dem des Mobilteils 11. Wenn daher durch die Schaltvorrichtung 14 in der Feststation 1 der Registriermodus R gewählt ist, kann gleichzeitig der Störer-Ausweichmodus der Feststation 1 ausgeschaltet werden. Dies bedeutet, daß im Gegensatz zum Normalmodus, bei dem, wie oben ausgeführt, die Feststation 1 die als gestört erkannte Trägerfrequenz $f_4$ vermeiden wird, bei einer Stellung der Schaltvorrichtung 14 auf Registriermodus R zum Zeitpunkt des Zeitschlitzes Z4 auf die Trägerfrequenz $f_4$ wechseln, wie es durch die Sequenz basierend auf dem Algorithmus des Prozessors 15 vorgeschrieben ist, obwohl der Feststation 1 die Trägerfrequenz $f_4$ als gestört bekannt ist. Der Wechsel der Trägerfrequenz $f_x$ vom Zeitschlitz Z3 zum Zeitschlitz Z4 ist in Fig. 4 durch den durchlinierten Pfeil $P_2$ dargestellt. Dadurch, daß bei Stellung der Schaltvorrichtung 14 auf Registriermodus R der Störer-Ausweichmodus der Feststation 1 gleichzeitig ausgeschaltet wird, ist also sichergestellt, daß eine Synchronisierung des Betriebs des Mobilteils 11 mit dem der Feststation 1 erfolgen kann. Nach Beenden der Anmeldeprozedur oder Registrierung des Mobilteils 11 an der Feststation 1 wird dann die Schaltvorrichtung 14 wieder von dem Registriermodus R auf den Normal-Übertragungsmodus N geschaltet, was automatisiert erfolgen kann, und somit kann automatisch der Störer-Ausweichmodus wieder eingeschaltet werden.

Alternativ kann zur Synchronisierung eines Mobilteils 11 an der Feststation 1 auch der Störer-Ausweichmodus eingeschaltet bleiben. In diesem Fall kann alllerdings der Zustand auftreten, daß das Mobilteil 2 noch im asynchronen Zustand eine Trägerfrequenz $f_x$ als die günstigste erfaßt und sich empfangsbereit auf diese Trägerfrequenz $f_x$ einstellt, die die Feststation auf Grund des Störer-Ausweichmodus übergeht. In diesem Fall wird das Mobilteil 11 so eingestellt, daß es einen vorbestimmten Zeitraum darauf wartet, daß die Trägerfrequenz $f_x$ des Kontrollsignals der Feststation 1 auf die von dem Mobilteil 11 gewählte Trägerfrequenz $f_x$ wechselt. Wenn der vorbestimmte Zeitraum vergangen ist, ohne daß die Trägerfrequenz $f_x$ des Kontrollsignals der Feststation 1 auf die von dem Mobilteil 11 gewählte Trägerfrequenz $f_x$ gewechselt ist, wiederholt das Mobilteil 11 die obengenannte Suchprozedur (Abtastung aller Trägerfrequenzen $f_x$, Erfassen der Trägerfrequenz $f_x$ mit

dem geringsten Energieinhalt, Setzen der Empfangsbereitschaft auf die als am günstigsten erfaßte Trägerfrequenz $f_x$, Warten).

Die Länge der vorbestimmten Wartezeitdauer bestimmt sich dabei abhängig von der Anzahl der Trägerfrequenzen und der Wechselfrequenz $f_w$, mit der die Trägerfrequenz des Kontrollsignals gewechselt wird.

Wenn beispielsweise hundert Trägerfrequenzen zur Verfügung stehen, die Trägerfrequenz jeweils nach einem Rahmen gewechselt wird und ein Rahmen 10 ms lang ist, kann die vorbestimmte Zeitdauer als

$$100 * 10 \text{ ms} = 1 \text{ s}$$

gewählt werden.

Bezugszeichenliste

1: Feststation (Basis)
2: Mobilteil (kabelloses Telefon)
3: Mobilteil
4: HF-Modul (in der Feststation)
5: HF-Modul (in dem Mobilteil)
6: Antenne (Feststation)
7 : Antenne (Mobilteil)
8: erster Funkübertragungsweg
9: zweiter Funkübertragungsweg
10: Endstellenleitung
11: Mobilteil
12: Ausgabeeinrichtung (Mobilteil)
13: Ausgabeeinrichtung (Feststation)
14: Schaltvorrichtung
15: Prozessor (Feststation)
16: Prozessor (Mobilteil)
$f_x$: Trägerfrequenz
$f_w$: Frequenz der Trägerfrequenzwechsel durch die Feststation
Zx: Zeitschlitz
$P_1$: Frequenzsprung (Störer-Ausweichmodus ein)
$P_2$: Frequenzsprung (Störer-Ausweichmodus aus)

**Patentansprüche**

1. Verfahren zur Synchronisierung der Trägerfrequenzen ($f_x$) eines Mobilteils (11) auf die Trägerfrequenzen ($f_x$) einer Feststation (1) für eine Funkübertragung von Daten, bei der die Daten auf mehreren Trägerfrequenzen ($f_x$) übertragen werden und bei dem ein Kontrollsignal von der Feststation (1) ausgesendet wird, dessen Trägerfrequenz ($f_x$) von Zeit zu Zeit gewechselt wird, **gekennzeichnet durch** die folgenden Schritte:

   - Aufeinanderfolgendes Erfassen der Empfangsverhältnisse auf jeder der mehreren Trägerfrequenzen ($f_x$) **durch** das Mobilteil (11),

   - Setzen des Mobilteils (11) auf Empfang auf derjenigen Trägerfrequenz, die die günstigsten Empfangsverhältnisse aufweist, bis die Trägerfrequenz ($f_x$) des Kontrollsignals der Feststation (1) auf die Trägerfrequenz ($f_x$) wechselt, auf die das Mobilteil (1) gesetzt ist, und

   - anschließendes Austauschen von Synchronisierungsdaten von der Feststation (1) zu dem Mobilteil (11) und/oder in der umgekehrten Richtung.

2. Verfahren nach Anspruch 1,
   **dadurch gekennzeichnet,**
   **daß** das Mobilteil (11) die Empfangsverhältnisse auf einer Trägerfrequenz ($f_x$) anhand der Größe des auf diese Trägerfrequenz ($f_x$) aufmodulierten Signals erfaßt.

3. Verfahren nach Anspruch 1 oder 2,
   **dadurch gekennzeichnet,**
   **daß** das Mobilteil (11), nachdem es auf Empfang auf der günstigsten Trägerfrequenz ($f_x$) gesetzt ist und eine vorbestimmte Zeitdauer verstrichen ist, in der die Trägerfrequenz ($f_x$) des Kontrollsignals der Feststation (1) nicht auf die Trägerfrequenz ($f_x$) des Mobilteils (11) gewechselt ist, das Mobilteil (11) erneut die Empfangsverhältnisse aufeinanderfolgend für jeden der mehreren Trägerfrequenzen ($f_x$) erfaßt und dann auf Empfang auf derjenigen Trägerfrequenz ($f_x$) gesetzt wird, die gemäß der erneuten Erfassung die günstigsten Empfangsverhältnisse aufweist.

4. Verfahren nach Anspruch 3,
   **dadurch gekennzeichnet,**
   **daß** die vorbestimmte Zeitdauer abhängig von der Zahl der Trägerfrequenzen ($f_x$) und der Wechselfrequenz ($f_w$) bestimmt wird, mit der die Trägerfrequenz (fx) des Kontrollsignals gewechselt wird.

5. Verfahren nach einem der vorhergehenden Ansprüche,
   **dadurch gekennzeichnet,**
   **daß** die Trägerfrequenz (fx) des Kontrollsignals nach einem oder mehreren Zeitschlitzen (Zx) einer Zeitmultiplex-Übertragung gewechselt wird.

6. Verfahren nach einem der Ansprüche 1 bis 4,
   **dadurch gekennzeichnet,**
   **daß** die Trägerfrequenz (fx) des Kontrollsignals nach einem oder mehreren Rahmen einer Zeitmultiplex-Übertragung gewechselt wird.

7. Verfahren nach einem der vorhergehenden Ansprüche,
   **dadurch gekennzeichnet,**

**daß** die Feststation (1) die Trägerfrequenz ($f_x$) entsprechend einer vorbestimmten Sequenz wechselt und das von der Feststation ausgesendete Kontrollsignal anzeigt, welcher Position der vorbestimmten Sequenz die aktuelle Trägerfrequenz ($f_x$) entspricht.

8. Verfahren nach einem der Ansprüche 1 bis 6,
   **dadurch gekennzeichnet,**
   **daß** das von der Feststation ausgesendete Kontrollsignal anzeigt, auf welche Trägerfrequenz als nächstes gewechselt wird.

9. Verfahren nach einem der Ansprüche 1 bis 6,
   **dadurch gekennzeichnet,**
   **daß** das von der Feststation ausgesendete Kontrollsignal anzeigt, welche Trägerfrequenz in jedem m-ten Rahmen verwendet wird.

10. Verfahren nach einem der vorhergehenden Ansprüche,
    **dadurch gekennzeichnet,**
    **daß** durch den Austausch der Synchronisierungsdaten eine Zeitschlitz (Zx)- und Rahmensynchronisation ausgeführt wird.

11. Anordnung zur Synchronisierung der Trägerfrequenzen ($f_x$) eines Mobilteils (11) auf die Trägerfrequenzen ($f_x$) einer Feststation (1) für eine Funkübertragung von Daten, bei der die Daten auf mehreren Trägerfrequenzen ($f_x$) übertragen werden, mit einer Einrichtung (4) in der Feststation (1) zum Aussenden eines Kontrollsignals, dessen Trägerfrequenz ($f_x$) von Zeit zu Zeit gewechselt wird,
    **gekennzeichnet durch**:

    - eine Einrichtung (5) in dem Mobilteil (11) zum Erfassen der Empfangsverhältnisse aufeinanderfolgend für jeden der mehreren Trägerfrequenzen ($f_x$),
    - eine Einrichtung (16) in dem Mobilteil (2), die das Mobilteil (11) auf Empfang auf derjenigen Trägerfrequenz ($f_x$) setzt, die die günstigsten Empfangsverhältnisse aufweist, bis die Aussendeeinrichtung (4) in der Feststation (1) die Trägerfrequenz ($f_x$) des Kontrollsignals auf die Trägerfrequenz ($f_x$) wechselt, auf die das Mobilteils (1) gesetzt ist, und
    - Einrichtungen (12, 13) in der Feststation (1) und dem Mobilteil (11) zum anschließenden Ausgeben von Synchronisierungsdaten von der Feststation (1) zu dem Mobilteil (11) und/oder in der umgekehrten Richtung.

12. Anordnung nach Anspruch 11,
    **dadurch gekennzeichnet,**
    **daß** die Erfassungseinrichtung (5) in dem Mobilteil (11) die Empfangsverhältnisse auf einer Trägerfrequenz ($f_x$) anhand der dieser Trägerfrequenz ($f_x$) aufmodulierten Signalhöhe erfaßt.

13. Anordnung nach Anspruch 11 oder 12,
    **dadurch gekennzeichnet,**
    **daß** die Erfassungseinrichtung (5) in dem Mobilteil (11), nachdem sie das Mobilteil (11) auf Empfang auf der günstigsten Trägerfrequenz ($f_x$) gesetzt hat und eine vorbestimmte Zeitdauer verstrichen ist, in der die Aussendeeinrichtung (4) in der Feststation (1) die Trägerfrequenz ($f_x$) des Kontrollsignals nicht auf die Trägerfrequenz ($f_x$) des Mobilteils (11) gewechselt hat, erneut die Empfangsverhältnisse aufeinanderfolgend für jede der mehreren Trägerfrequenzen ($f_x$) erfaßt und dann die Empfangseinrichtung (16) das Mobilteil (11) auf Empfang auf derjenigen Trägerfrequenz ($f_x$) setzt, die nunmehr gemäß der erneuten Erfassung die günstigsten Empfangsverhältnisse aufweist.

14. Anordnung Anspruch 13,
    **dadurch gekennzeichnet,**
    **daß** die vorbestimmte Zeitdauer abhängig von der Zahl der Trägerfrequenzen ($f_x$) und der Frequenz ($f_w$) bestimmt ist, mit der die Aussendeeinrichtung (4) in der Feststation (1) die Trägerfrequenz ($f_x$) des Kontrollsignals wechselt.

15. Anordnung nach einem der Ansprüche 11 bis 14,
    **dadurch gekennzeichnet,**
    **daß** Aussendeeinrichtung (4) in der Feststation (1) die Trägerfrequenz ($f_x$) des Kontrollsignals entsprechend einer vorbestimmten Sequenz wechselt und das von der Aussendeeinrichtung (4) ausgesendete Kontrollsignal Daten aufweist, die anzeigen, welcher Position der vorbestimmten Sequenz die aktuelle Trägerfrequenz ($f_x$) entspricht.

16. Anordnung nach einem der Ansprüche 11 bis 15,
    **dadurch gekennzeichnet,**
    **daß** die Ausgabeeinrichtungen (12, 13) durch die Ausgabe der Synchronisierungsdaten eine Zeitschlitz- (Zx) und Rahmensynchronisation ausführen.

**Claims**

1. Method for synchronizing the carrier frequencies ($f_x$) of a mobile unit (11) with the carrier frequencies ($f_x$) of a fixed station (1) for a transmission of data by radio, in which transmission the data are transmitted on a plurality of carrier frequencies ($f_x$), and in which method a check signal whose carrier frequency ($f_x$) is changed from time to time is broadcast by the fixed station (1), **characterized by** the following steps:

- the reception conditions on each of the plurality of carrier frequencies ($f_x$) are sensed successively by the mobile unit (11),
- the mobile unit (11) is set to reception on the carrier frequency which has the most favourable reception conditions, until the carrier frequency ($f_x$) of the check signal of the fixed station (1) changes to the carrier frequency ($f_x$) to which the mobile unit (11) is set, and
- synchronization data is subsequently exchanged between the fixed station (1) and the mobile unit (11) and/or in the opposite direction.

2. Method according to Claim 1, **characterized in that** the mobile unit (11) senses the reception conditions on a carrier frequency ($f_x$) by means of the magnitude of the signal modulated onto this carrier frequency ($f_x$).

3. Method according to Claim 1 or 2, **characterized in that**, after the mobile unit (11) has been set to reception on the most favourable carrier frequency ($f_x$) and a predetermined time period in which the carrier frequency ($f_x$) of the check signal of the fixed station (1) has not changed to the carrier frequency ($f_x$) of the mobile unit (11) has elapsed, said mobile unit (11) again senses the reception conditions successively for each of the plurality of carrier frequencies ($f_x$) and is then set to reception on the carrier frequency ($f_x$) which has the most favourable reception conditions in accordance with the new sensing.

4. Method according to Claim 3, **characterized in that** the predetermined time period is determined as a function of the number of carrier frequencies ($f_x$) and of the changing frequency ($f_w$) with which the carrier frequency ($f_x$) of the check signal is changed.

5. Method according to one of the preceding claims, **characterized in that** the carrier frequency ($f_x$) of the check signal is changed after one or more time slots (Zx) of a time division multiplex transmission.

6. Method according to one of Claims 1 to 4, **characterized in that** the carrier frequency ($f_x$) of the check signal is changed after one or more frames of a time division multiplex transmission.

7. Method according to one of the preceding claims, **characterized in that** the fixed station (1) changes the carrier frequency ($f_x$) in accordance with a predetermined sequence and the check signal broadcast by the fixed station indicates the position of the predetermined sequence to which the current carrier frequency ($f_x$) corresponds.

8. Method according to one of Claims 1 to 6, **characterized in that** the check signal broadcast by the fixed station indicates the carrier frequency which is to be changed to next.

9. Method according to one of Claims 1 to 6, **characterized in that** the check signal broadcast by the fixed station indicates which carrier frequency is used in each m-th frame.

10. Method according to one of the preceding claims, **characterized in that** time-slot (Zx) and frame synchronization is carried out by means of the exchange of synchronization data.

11. Arrangement for synchronizing the carrier frequencies ($f_x$) of a mobile unit (11) with the carrier frequencies ($f_x$) of a fixed station (1) for a transmission of data by radio, in which transmission the data are transmitted on a plurality of carrier frequencies ($f_x$), having a device (4) in the fixed' station (1) for broadcasting a check signal whose carrier frequency ($f_x$) is changed from time to time, **characterized by**:

- a device (5) in the mobile unit (11) for sensing the reception conditions successively for each of the plurality of carrier frequencies ($f_x$),
- a device (16) in the mobile unit (11), which device (16) sets the mobile unit (11) to reception on the carrier frequency ($f_x$) which has the most favourable reception conditions, until the broadcasting device (4) in the fixed station (1) changes the carrier frequency ($f_x$) of the check signal to the carrier frequency ($f_x$) to which the mobile unit (11) is set, and
- devices (12, 13) in the fixed station (1) and the mobile unit (11) for outputting synchronization data from the fixed station (1) to the mobile unit (11) and/or in the opposite direction.

12. Arrangement according to Claim 11, **characterized in that** the sensing device (5) in the mobile unit (11) senses the reception conditions on a carrier frequency ($f_x$) by means of the signal level modulated onto this carrier frequency ($f_x$).

13. Arrangement according to Claim 11 or 12, **characterized in that**, after the sensing device (5) in the mobile unit (11) has set the mobile unit (11) to reception on the most favourable carrier frequency ($f_x$) and a predetermined time period has elapsed in which the broadcasting device (4) in the fixed station (1) has not changed the carrier frequency ($f_x$) of the check signal to the carrier frequency ($f_x$) of the mobile unit (11), said mobile unit (11) again senses the reception conditions successively for each of the plurality of carrier frequencies ($f_x$), and the reception device (16) then sets the mobile unit (11) to reception on the carrier frequency ($f_x$) which

then has the most favourable reception conditions in accordance with the new sensing.

14. Arrangement according to Claim 13, **characterized in that** the predetermined time period is determined as a function of the number of carrier frequencies ($f_x$) and of the frequency ($f_w$) with which the broadcasting device (4) in the fixed station (1) changes the carrier frequency ($f_x$) of the check signal.

15. Arrangement according to one of Claims 11 to 14, **characterized in that** the broadcasting device (4) in the fixed station (1) changes the carrier frequency ($f_x$) of the check signal in accordance with a predetermined sequence, and the check signal broadcast by the broadcasting device (4) has data which indicate the position of the predetermined sequence to which the current carrier frequency ($f_x$) corresponds.

16. Arrangement according to one of Claims 11 to 15, **characterized in that** the output devices (12, 13) carry out time-slot (Zx) and frame synchronization by means of the outputting of the synchronization data.

### Revendications

1. Procédé pour la synchronisation des fréquences porteuses ($f_x$) d'une partie mobile (11) sur les fréquences porteuses ($f_x$) d'une station fixe (1) pour une radiotransmission de données, dans lequel les données sont transmises sur plusieurs fréquences porteuses ($f_x$) et dans lequel un signal de contrôle est émis par la station fixe (1), signal dont la fréquence porteuse ($f_x$) est changée de temps en temps, **caractérisé par** les étapes suivantes :

   - saisie successive des résultats de réceptions sur chacune des nombreuses fréquences porteuses ($f_x$) par la partie mobile (11),
   - mise à l'écoute de la partie mobile (11) pour rechercher la fréquence porteuse offrant les meilleurs résultats de réception, jusqu'à ce que la fréquence porteuse ($f_x$) du signal de contrôle de la station fixe (1) passe sur la fréquence porteuse ($f_x$) sur laquelle est positionnée la partie mobile (1), et
   - échange ultérieur de données de synchronisation de la station fixe (1) vers la partie mobile (11) et/ou dans le sens inverse.

2. Procédé selon la revendication 1, **caractérisé en ce que** la partie mobile (11) saisit les résultats de réception sur une fréquence porteuse ($f_x$) en se basant sur la grandeur du signal modulé sur cette fréquence porteuse ($f_x$).

3. Procédé selon la revendication 1 ou 2, **caractérisé en ce que**, après s'être mise à l'écoute pour rechercher la fréquence porteuse ($f_x$) la plus avantageuse et avoir laissé passer une période de temps prédéterminée pendant laquelle la fréquence porteuse ($f_x$) du signal de contrôle de la station fixe (1) n'est pas passée sur la fréquence porteuse ($f_x$) de la partie mobile (11), la partie mobile (11) saisit à nouveau les résultats de réception, successivement, pour chacune des nombreuses fréquences porteuses ($f_x$) puis se met à l'écoute pour rechercher la fréquence porteuse ($f_x$) qui offre, selon la nouvelle saisie, les meilleurs résultats de réception.

4. Procédé selon la revendication 3, **caractérisé en ce que** la période de temps prédéterminée est déterminée en fonction du nombre de fréquences porteuses ($f_x$) et de la fréquence de changement ($f_w$) selon laquelle la fréquence porteuse ($f_x$) du signal de contrôle est changée.

5. Procédé selon l'une des revendications précédentes, **caractérisé en ce que** la fréquence porteuse ($f_x$) du signal de contrôle est changée après un ou plusieurs intervalle/s de temps (Zx) d'une transmission avec multiplex à répartition dans le temps.

6. Procédé selon l'une des revendications 1 à 4, **caractérisé en ce que** la fréquence porteuse ($f_x$) du signal de contrôle est changée après une ou plusieurs trame/s d'une transmission avec multiplex à répartition dans le temps.

7. Procédé selon l'une des revendications précédentes, **caractérisé en ce que** la station fixe (1) change la fréquence porteuse ($f_x$) selon une séquence prédéterminée et le signal de contrôle émis par la station fixe indique à quelle position de la séquence prédéterminée correspond la fréquence porteuse ($f_x$) actuelle.

8. Procédé selon l'une des revendications 1 à 6, **caractérisé en ce que** le signal de contrôle émis par la station fixe indique la prochaine fréquence porteuse sur laquelle elle passera.

9. Procédé selon l'une des revendications 1 à 6, **caractérisé en ce que** le signal de contrôle émis par la station fixe indique quelle fréquence porteuse est utilisée dans chaque m-ième trame.

10. Procédé selon l'une des revendications précédentes, **caractérisé en ce qu'**une synchronisation des intervalles de temps (Zx) et des trames est exécutée grâce à l'échange des données de synchronisation.

11. Dispositif pour la synchronisation des fréquences

porteuses (f$_x$) d'une partie mobile (11) sur les fréquences porteuses (f$_x$) d'une station fixe (1) pour une radiotransmission de données, dans lequel les données sont transmises sur plusieurs fréquences porteuses (f$_x$), comprenant un dispositif (4) dans la station fixe (1) pour émettre un signal de contrôle dont la fréquence porteuse (f$_x$) est changée de temps en temps, **caractérisé par** :

- un dispositif (5) dans la partie mobile (11) pour saisir les résultats de réception, successivement, pour chacune des nombreuses fréquences porteuses (f$_x$),
- un dispositif (16) dans la partie mobile (2), qui met la partie mobile (11) à l'écoute pour rechercher la fréquence porteuse (f$_x$) offrant les meilleurs résultats de réception, jusqu'à ce que le dispositif émetteur (4) dans la station fixe (1) fasse passer la fréquence porteuse (f$_x$) du signal de contrôle sur la fréquence porteuse (f$_x$) sur laquelle est positionnée la partie mobile (1), et
- des dispositifs (12, 13) dans la station fixe (1) et la partie mobile (11) pour l'émission ultérieure de données de synchronisation de la station fixe (1) vers la partie mobile (11) et/ou dans le sens inverse.

12. Dispositif selon la revendication 11, **caractérisé en ce que** le dispositif de saisie (5) dans la partie mobile (11) saisit les résultats de réception sur une fréquence porteuse (f$_x$) en se basant sur la grandeur du signal modulé sur cette fréquence porteuse (f$_x$).

13. Dispositif selon la revendication 11 ou 12, **caractérisé en ce que**, après avoir mis la partie mobile (11) à l'écoute pour rechercher la fréquence porteuse (f$_x$) la plus avantageuse et avoir laissé passer une période de temps prédéterminée pendant laquelle le dispositif émetteur (4) dans la station fixe (1) n'a pas fait passer la fréquence porteuse (f$_x$) du signal de contrôle sur la fréquence porteuse (f$_x$) de la partie mobile (11), le dispositif de saisie (5) dans la partie mobile (11) saisit à nouveau les résultats de réception, successivement, pour chacune des nombreuses fréquences porteuses (f$_x$), puis le dispositif récepteur (16) met la partie mobile (11) à l'écoute pour rechercher la fréquence porteuse (f$_x$) qui offre désormais, selon la nouvelle saisie, les meilleurs résultats de réception.

14. Dispositif selon la revendication 13, **caractérisé en ce que** la période de temps prédéterminée est déterminée en fonction du nombre de fréquences porteuses (f$_x$) et de la fréquence (f$_w$) à laquelle le dispositif émetteur (4) dans la station fixe (1) change la fréquence porteuse (f$_x$) du signal de contrôle.

15. Dispositif selon l'une des revendications 11 à 14, **caractérisé en ce que** le dispositif émetteur (4) dans la station fixe (1) change la fréquence porteuse (f$_x$) du signal de contrôle selon une séquence prédéterminée et le signal de contrôle émis par le dispositif émetteur (4) contient des données qui indiquent à quelle position de la séquence prédéterminée correspond la fréquence porteuse (f$_x$) actuelle.

16. Dispositif selon l'une des revendications 11 à 16, **caractérisé en ce que** les dispositifs émetteurs (12, 13) exécutent une synchronisation des intervalles de temps (Zx) et des trames en émettant des données de synchronisation.

# FIG 1

# FIG 2

Trägerfrequenz $f_X$

Zeitschlitze $Z_X$

von FS nach MS
(FS:senden)

von MS nach FS
(FS:empfangen)

10ms

## FIG 3

364,6μs

Schicht 2

| Kontrollbereich | | Infomationen |
|---|---|---|
| Algorithmus | Position | |

416,7μs

Schicht 1

| Kanal 1 | Kanal 2 | | Kanal 12 | Kanal 13(1) | Kanal 14(2) | | Kanal 24(12) | Kanal 1 | • • • |

von Feststation zur Mobilstation

von Mobilstation zur Feststation

Rahmen 10ms

## FIG 4

Trägerfrequenz $f_X$

4

3

$P_2$

2

$P_1$

1

| Z1 | Z2 | Z3 | Z4 | Z5 | • • • |

Zeitschlitz $Z_X$

14